## Europäisches Patentamt

## European Patent Office

## Office européen des brevets

(19)

(11) Veröffentlichungsnummer: **0 118 587**
**B1**

(12)

# EUROPÄISCHE PATENTSCHRIFT

(45) Veröffentlichungstag der Patentschrift:
28.12.88

(51) Int. Cl.⁴: **B 23 Q 3/157**

(21) Anmeldenummer: **83105625.4**

(22) Anmeldetag: **08.06.83**

(54) Werkzeugmaschine mit einer Anzahl von Bearbeitungsspindeln.

(30) Priorität: **17.01.83 DE 3301334**

(43) Veröffentlichungstag der Anmeldung:
**19.09.84 Patentblatt 84/38**

(45) Bekanntmachung des Hinweises auf die Patenterteilung:
**28.12.88 Patentblatt 88/52**

(84) Benannte Vertragsstaaten:
**AT CH FR GB IT LI SE**

(56) Entgegenhaltungen:
**EP-A- 0 044 886**
**EP-A- 0 111 046**
**DE-A- 1 920 275**
**DE-A- 2 647 633**
**DE-A- 2 811 357**
**DE-C- 288 175**
**FR-A- 2 496 532**
**JP-A-53 080 875**
**US-A- 3 191 260**
**US-A- 3 604 083**
**US-A- 4 204 303**

(73) Patentinhaber: **Alfing Kessler Sondermaschinen GmbH,
Postfach 31 20, D-7080 Aalen-Wasseralfingen 1 (DE)**

(72) Erfinder: **Gücklhorn, Karl, Spitzwegstrasse 16,
D-7080 Aalen 1 (DE)**
Erfinder: **Carl, Wolfgang, Im Weiherle 9,
D-7080 Aalen 1 (DE)**

(74) Vertreter: **Füchsle, Klaus, Dipl.-Ing. et al, Hoffmann.
Eitle & Partner Patentanwälte Arabellastrasse 4,
D-8000 München 81 (DE)**

ACTORUM AG

EP 0 118 587 B1

## Beschreibung

Die vorliegende Erfindung bezieht sich auf eine Werkzeugmaschine mit einer Anzahl von Bearbeitungsspindeln, die Schnellwechselaufnahmen für Werkzeuge tragende Werkzeughalter besitzen, welche mit den Schnellwechselaufnahmen in Drehrichtung über Mitnahmenasen formschlüssig kuppelbar sind, mit einer Werkzeugwechseleinrichtung, welche mit einem Werkzeugträger zur Aufnahme der die gebrauchten Werkzeuge und die neuen Werkzeuge tragenden Werkzeughalter ausgestattet ist, der von einer Bestückungsstellung in eine Wechselstellung vor den Bearbeitungsspindeln bewegbar ist und jeweils eine der Anzahl der Bearbeitungsspindeln entsprechende Anzahl von Aufnahmeöffnungen für die gebrauchten Werkzeuge und eine entsprechende Anzahl von Aufnahmeöffnungen für die neuen Werkzeuge aufweist.

Bei bekannten Werkzeugmaschinen mit Werkzeugwechseleinrichtungen dieser Art (vgl. DE-A-1 920 275) besteht das Problem, dass ein ordnungsgemässes automatisches Ankoppeln der die neuen Werkzeuge tragenden Werkzeughalter über die Schnellwechselaufnahmen an die Bearbeitungsspindeln nur dann möglich ist, wenn die Mitnahmenasen der Werkzeughalter exakt in den entsprechenden Ausnehmungen in den Schnellwechselaufnahmen zu liegen kommen (vgl. Spalte 6, Zeile 7 bis 14, der DE-A-1 920 275). Dies setzt voraus, dass zum einen die mit den neuen Werkzeugen bestückten Werkzeughalter in einer genauen Winkellage in die Aufnahmeöffnungen der Werkzeugträger eingesetzt werden und zum anderen die Bearbeitungsspindeln mit den Schnellwechselaufnahmen in einer genau auf diese Winkellage abgestimmten Stellung stillgesetzt werden. Das Stillsetzen der Bearbeitungsspindeln in einer genau vorgegebenen Stellung erfordert doch gerade bei Werkzeugmaschinen mit einer Vielzahl von Bearbeitungsspindeln einen erheblichen konstruktiven und steuerungstechnischen Aufwand für den Antrieb der Bearbeitungsspindeln (vgl. Spalte 6, Zeilen 30 bis 36 der DE-A-1 920 275.

Ein weiteres Problem besteht darin, dass bei derartigen bekannten Werkzeugwechseleinrichtungen der Aufbau des Werkzeugträgers relativ kompliziert ist. So besteht der Werkzeugträger aus einem langgestreckten, beidseitig gelagerten und drehbaren Stützrahmen, der mit einer Vielzahl von versetzt zueinander angeordneten, einseitig offenen Aufnahmemulden ausgestattet ist, die die Aufnahmeöffnungen für die Werkzeughalter bilden. Diese Aufnahmemulden sind dabei jeweils mit auf Drehzapfen gelagerten federbelasteten Greifbacken zum Festlegen der Werkzeughalter ausgestattet, wodurch sich insgesamt ein relativ aufwendiger mechanischer Aufbau ergibt.

Aufgabe der vorliegenden Erfindung ist es, eine Werkzeugmaschine der eingangs beschriebenen Art derart weiterzubilden, dass bei einfachem mechanischem Aufbau der Aufwand für das automatische Ankoppeln der Werkzeughalter an die Bearbeitungsspindeln möglichst weitgehend reduziert wird.

Diese Aufgabe wird erfindungsgemäss dadurch gelöst,

— dass die mit den Werkzeugen bestückten Werkzeughalter durch die Aufnahmeöffnungen der Werkzeugträger jeweils nur in einer, d.h. der für den Wechselvorgang erforderlichen Wechselrichtung hindurchschiebbar und in ihrer Ab- bzw. Ankoppelungsstellung in den Aufnahmeöffnungen derart gehaltert sind, dass ein Durchschieben gegen die Wechselrichtung gesperrt ist,

— dass zumindest bei den die neuen Werkzeuge tragenden Werkzeughaltern die Mitnahmenasen gegenüber dem Werkzeugträger einen begrenzten Weg gegen die Wechselrichtung entgegen der Kraft einer Feder zurückschiebbar sind, und

— dass eine Einrichtung vorgesehen ist, die eine Drehbewegung der Werkzeughalter in den Aufnahmeöffnungen der Werkzeugträger im zurückgeschobenen Zustand der Mitnahmenasen blokkiert.

Durch die erfindungsgemässen Merkmale ist erstmalig eine Werkzeugmaschine geschaffen, mit der ohne spezielle Steuerungs- und Regelungsmittel für den Antrieb der Bearbeitungsspindeln eine absolut zuverlässige Ankoppelung der die neuen Werkzeuge tragenden Werkzeughalter an die Bearbeitungsspindeln ermöglicht wird.

So liegt der Erfindung der Gedanke zugrunde, dass das hinsichtlich des Steuerungs- und Regelungsaufwandes sehr aufwendige exakte Stillsetzen der Bearbeitungsspindeln in einer bestimmten Stellung dann vermieden werden kann, wenn Vorkehrungen getroffen werden, die es ermöglichen, dass die mit neuen Werkzeugen bestückten Werkzeughalter von den Bearbeitungsspindeln im rotierenden Zustand aufgenommen werden können. Da die Antriebe der Bearbeitungsspindeln üblicherweise Gangstufen aufweisen, in denen die Bearbeitungsspindeln mit geringer Drehzahl rotieren, wird unter Ausnützung dieses Umstandes erfindungsgemäss die Anordnung wie folgt getroffen: Zuerst werden mittels des Werkzeugträgers die mit neuen Werkzeugen bestückten Werkzeughalter mit dem Schaft in die rotierenden Schnellwechselaufnahmen eingeführt, bis die Mitnahmenasen an den korrespondierenden Teilen der Schnellwechselaufnahmen zur Anlage gelangen. Aufgrund der erfindungsgemäss getroffenen Möglichkeit, dass die Mitnahmenasen gegenüber dem Werkzeugträger einen begrenzten Weg gegen die Wechselrichtung entgegen der Kraft einer Feder zurückgeschoben werden können, wird der Werkzeugträger im Anschluss daran um einen bestimmten Betrag weiter in Richtung der Bearbeitungsspindeln bewegt, so dass die Mitnahmenasen unter der Wirkung der Feder auf den korrespondierenden Teilen der Schnellwechselaufnahme entlang schleifen, bis sie in die entsprechenden Ausnehmungen in den Schnellwechselaufnahmen einrasten und aufgrund der damit verbundenen formschlüssigen Ankopplung von diesen mitgenommen werden. Um zu verhindern, dass sich bei diesem Vorgang die Werkzeughalter mitdrehen und damit die formschlüssige Ankopplung nicht zustandekommt, ist erfindungsgemäss die Einrichtung vorgesehen, die eine Drehbewegung der Werkzeughalter in den Aufnahmeöffnungen des Werkzeugträgers blockiert. Da diese Blockierwirkung jedoch erfindungsgemäss nur im zurückgeschobenen Zustand der Mitnahmenasen erfolgt, können sich die Werkzeughalter wieder frei in den Aufnahmeöffnungen des Werkzeugträgers drehen, sobald die Mitnahmenasen in die Ausnehmungen in den Schnellwechselaufnahmen eingerastet und damit aus ihrer zurückgeschobenen, eine Drehbewegung blockierenden Stellung herausbewegt worden sind.

Aufgrund der erfindungsgemässen Massnahme, dass die Werkzeughalter durch die Aufnahmeöffnungen des Werkzeugträgers hindurchschiebbar sind, braucht der Werkzeugträger nach dem Ankoppeln der Werkzeughalter an die Bearbeitungsspindeln zum Abschluss des Werkzeugwechselvorganges lediglich aus seiner Wechselstellung zurückgezogen und in die Bestückungsstellung gebracht zu werden.

Zur Abkoppelung der gebrauchten Werkzeuge ist es erfindungsgemäss lediglich erforderlich, dass der Werkzeugträger mit seinen Aufnahmeöffnungen soweit über die mit den gebrauchten Werkzeugen bestückten Werkzeughaltern geschoben wird, dass sich diese kurz vor ihrer Abkoppelungsstellung in den Aufnahmeöffnungen befinden. Werden dann die Schnellwechselaufnahmen gelöst, was in beliebiger Weise erfolgen kann, so treten die in diesen angeordneten Auswerfer in Funktion und schieben die Werkzeughalter in die Abkoppelungsstellung im Werkzeugträger. Da in dieser Abkoppelungsstellung die Werkzeughalter im Werkzeugträger nicht mehr gegen die Wechselrichtung durchgeschoben werden können, braucht der Werkzeugträger zum Abziehen der Werkzeughalter von den Bearbeitungsspindeln lediglich von seiner Wechselstellung in die Bestückungsstellung verbracht zu werden, in der die mit den gebrauchten Werkzeugen bestückten Werkzeughalter dann durch einfaches Hindurchziehen durch den Werkzeugträger entnommen werden können.

Gemäss einer vorteilhaften Weiterbildung der Erfindung können die Schnellwechselaufnahmen zum Abkoppelungsvorgang durch den Werkzeugträger und somit automatisch gelöst werden. Hierzu ist es zweckmässig, dass am Werkzeugträger auf der den Bearbeitungsspindeln zugewandten Seite dicht neben den Aufnahmeöffnungen für die mit gebrauchten Werkzeugen bestückten Werkzeughalter Aufstossnasen angeordnet sind, durch die die Betätigungshülse der Schnellwechselaufnahmen zum Auslösen des Auswerfvorganges zurückschiebbar sind.

Werkzeugwechseleinrichtungen der erfindungsgemässen Art eignen sich insbesondere für Konstruktionen, wie sie in der EP-A-0 111 046 (gemäss Artikel 54(3) zu berücksichtigen) der Anmelderin beschrieben sind. Demnach ist es zweckmässig, dass der Werkzeugträger als Platte ausgestaltet ist und die Aufnahmeöffnungen für die Werkzeughalter von Durchgangsbohrungen in der Platte gebildet sind, deren Achsen im wesentlichen senkrecht zur Plattenebene verlaufen. Grundsätzlich können jedoch die Werkzeugträger auch jede andere beliebige Form aufweisen.

Die Halterung, d.h. die Festlegung der Werkzeughalter in der Ab- bzw. Ankoppelungsstellung in den Aufnahmeöffnungen sowie das Sperren der Durchschubbewegung der Werkzeughalter gegen die Wechselrichtung kann grundsätzlich in verschiedenster Weise erfolgen. Aufgrund ihres einfachen technischen Aufbaus und ihrer zuverlässigen Arbeitsweise eignen sich jedoch hierfür besonders Rastanordnungen.

Eine technisch einfach aufgebaute und zuverlässige Rastanordnung umfasst zweckmässigerweise mindestens einen mit dem Werkzeugträger verbundenen federnden Haltenocken, der in eine Ringnut am Werkzeughalter aushebbar eingreift. Um einerseits ein Durchschieben in Wechselrichtung zuzulassen und andererseits ein Durchschieben gegen die Wechselrichtung zu blockieren, ist es zweckmässig, dass der federnde Haltenocken bezogen auf die Wechselrichtung auf seiner Vorderseite eine Aufgleitschräge und auf seiner Rückseite eine Sperrfläche aufweist.

Eine hinsichtlich der Montage und der Wartung besonders zweckmässige Anordnung wird dann erreicht, wenn der federnde Haltenocken in einem Einsatz angeordnet ist, der in einer Aussparung neben der Aufnahmeöffnung im Werkzeugträger befestigt ist.

Eine Verwendung des Einsatzes sowohl in den Aufnahmeöffnungen für die gebrauchten, als auch in den Aufnahmeöffnungen für die neuen Werkzeuge wird dadurch erreicht, dass der Einsatz wahlweise derart in der zugeordneten Aussparung befestigbar ist, dass die Sperrfläche des Haltenockens den Bearbeitungsspindeln entweder zu- oder abgewandt ist.

Bei einer bevorzugten Ausführungsform der erfindungsgemässen Werkzeugmaschine ist jeder Werkzeughalter mit einer einzigen Ringnut ausgestattet, wobei die Haltenocken aller Aufnahmeöffnungen des Werkzeugträgers in einer Ebene liegen.

Es ist jedoch auch möglich, jeden Werkzeughalter mit zwei im Abstand nebeneinander angeordneten Ringnuten auszustatten und die Haltenocken der Aufnahmeöffnungen für die mit neuen Werkzeugen bestückten Werkzeughalter in einer ersten und die Haltenocken der Aufnahmeöffnungen für die mit gebrauchten Werkzeugen bestückten Werkzeughalter in einer zweiten Ebene anzuordnen.

Grundsätzlich kann die Einrichtung zum Blokkieren der Drehbewegung des Werkzeughalters in der jeweiligen Aufnahmeöffnung des Werkzeugträgers in verschiedenster Weise ausgebildet sein. Vorteilhaft ist es jedoch, diese Einrichtung mit einer innerhalb des Schaftes des Werkzeughalters angeordneten Klemmeinrichtung auszustatten, die kraft- oder formschlüssig an den Werkzeugträger angreift.

Bei einer derartigen Ausführungsform ist es vorteilhaft, dass die Mitnahmenasen im Schaft des Werkzeughalters in dessen Achsrichtung gegen die Wechselrichtung der Werkzeuge einen begrenzten Weg verschiebbar gelagert sind und mit der Klemmeinrichtung in Wirkverbindung stehen.

Eine technisch besonders einfach aufgebaute und betriebssichere Anordnung wird bei einer derartigen Ausgestaltung dann erreicht, wenn die Klemmeinrichtung eine mit den Mitnahmenasen verbundenen, innerhalb des Schaftes in dessen Achsrichtung hin- und herbewegbaren Stössel umfasst, der über eine Schräge auf Klemmittel einwirkt, die sich kraft- oder formschlüssig an der Innenfläche der Aufnahmeöffnung abstützen.

Die Klemmittel bestehen bei einer derartigen Konstruktion vorteilhafterweise aus einem in einer Ringnut auf der Aussenseite des Schaftes eingesenkten O-Ring, der über einen oder mehrere mit der Schräge in Verbindung stehende Druckelemente an der Innenfläche der Aufnahmeöffnung anpressbar ist. Zweckmässig ist es bei einer derartigen Ausführung, wenn die Schräge von einem konischen Kopf des Stössels gebildet ist. Die Druckelemente können dabei vorteilhafterweise als Druckstifte ausgebildet sein.

Gemäss einem weiteren Ausführungsbeispiel der erfindungsgemässen Werkzeugmaschine kann die Einrichtung zum Blockieren der Drehbewegung des Werkzeughalters auch aus einer auf dem Schaft des Werkzeughalters drehbar gelagerten und gegenüber dem Werkzeugträger undrehbar festlegbaren Büchse bestehen, die über eine im Schaft angeordnete Raste drehfest mit dem Schaft kuppelbar ist. Bei einer derartigen Ausgestaltung ist es zweckmässig, dass die Mitnahmenasen fest mit dem Werkzeughalter verbunden sind und die Büchse zum begrenzten Zurückschieben der Mitnahmenasen gegen die Wechselrichtung auf dem Schaft gegen die Kraft einer Druckfeder in Achsrichtung des Schaftes verschiebbar gelagert ist. Bei einer derartigen Ausführungsform werden somit im Gegensatz zu der im vorangegangenen beschriebenen Ausführungsform nicht die Mitnahmenasen allein, sondern diese zusammen mit den Werkzeughaltern um einen begrenzten Weg gegen die Wechselrichtung entgegen der Kraft der Feder gegenüber dem Werkzeugträger zurückgeschoben.

Bei dieser Einrichtung zum Blockieren der Drehbewegung des Werkzeughalters im Werkzeugträger ist die Büchse vorteilhafterweise auf ihrer Innenseite mit einer Ringnut sowie mit mindestens einer senkrecht dazu verlaufenden Längsnut ausgestattet. Vorteilhaft ist es dabei, dass durch das Verschieben der Büchse die im Schaft gelagerte Raste zum drehfesten Ankuppeln des Schaftes an die Büchse aus der Ringnut aushebbar und in den Bereich der Längsnut verlagerbar ist.

Um nun zu verhindern, dass sich die über die Raste drehfest mit dem Schaft gekuppelte Büchse in der Aufnahmeöffnung beim Ankoppelungsvorgang dreht, ist es vorteilhaft, dass an dem Werkzeugträger eine federnde Umfangsraste befestigt ist, die in Ausnehmungen an der Aussenseite der Büchse eingreift.

Eine besonders einfache Ausgestaltung ergibt sich, wenn die Büchse zur Aufnahme der den Schaft umgebenden Druckfeder auf ihrer Innenseite eine Abstufung aufweist.

In den durch diese Abstufung gebildeten Ringraum kann bei diesem Ausführungsbeispiel eine Federbüchse angeordnet werden, an deren Stirnfläche sich die Druckfeder abstützt und deren andere Stirnfläche am Werkzeughalter anliegt.

In einem solchen Fall wird die eine Ringnut von der einen Stirnfläche der Büchse und einem Bund des Werkzeughalters und die andere Ringnut von der anderen Stirnfläche der Büchse und einem Bund der Federbüchse gebildet.

Bei Ausführungsbeispielen, bei denen der Werkzeugträger als Platte ausgestaltet ist und die Aufnahmeöffnungen von Durchgangsbohrungen in der Platte gebildet sind, deren Achsen im wesentlichen senkrecht zur Plattenebene verlaufen, ist es zweckmässig, dass die Aussparungen für die den federnden Haltenocken tragenden Einsätze von einer Bohrung oder einer Durchbrechung gebildet sind, die im wesentlichen parallel zur Durchgangsbohrung in der Platte verläuft, jedoch derart nahe neben der Durchgangsbohrung angeordnet ist, dass sie in ihrem Randbereich in die Durchgangsbohrung einmündet.

Im folgenden sind zur weiteren Erläuterung und zum besseren Verständnis zwei Ausführungsbeispiele der Erfindung unter Bezugnahme auf die beigefügten Zeichnungen näher beschrieben.

Fig. 1 zeigt schematisch ein erstes Ausführungsbeispiel einer erfindungsgemässen Werkzeugmaschine, wobei der besseren Übersichtlichkeit halber lediglich die wesentlichsten Teile dargestellt sind,

Fig. 2 zeigt ein Detail der Fig. 1 in vergrössertem Massstab,

Fig. 3 zeigt schematisch ein zweites Ausführungsbeispiel einer erfindungsgemässen Werkzeugmaschine, wobei der besseren Übersichtlichkeit halber lediglich die wesentlichsten Teile dargestellt sind, und

Fig. 4 und 5 zeigen jeweils Details der Ausführungsform gemäss Fig. 3 in vergrössertem Massstab.

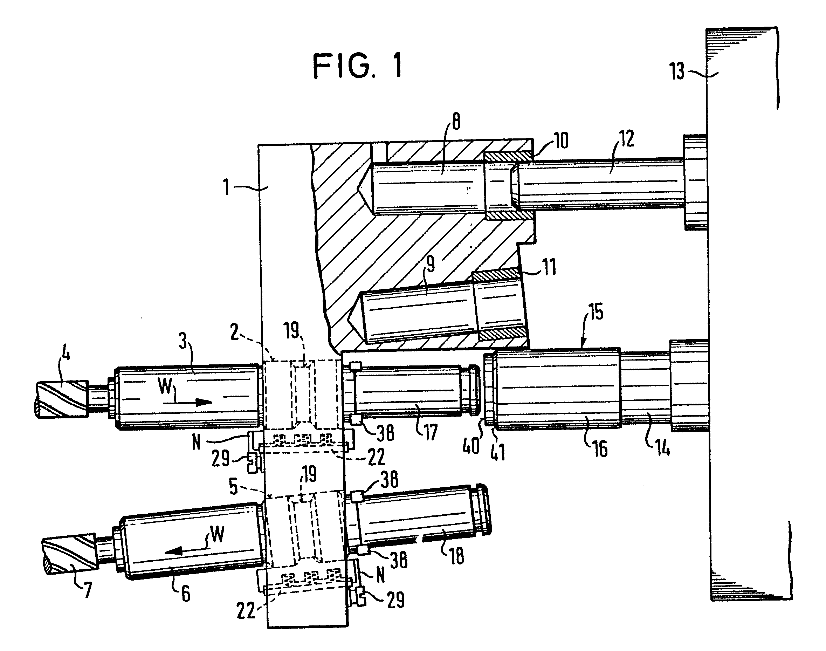

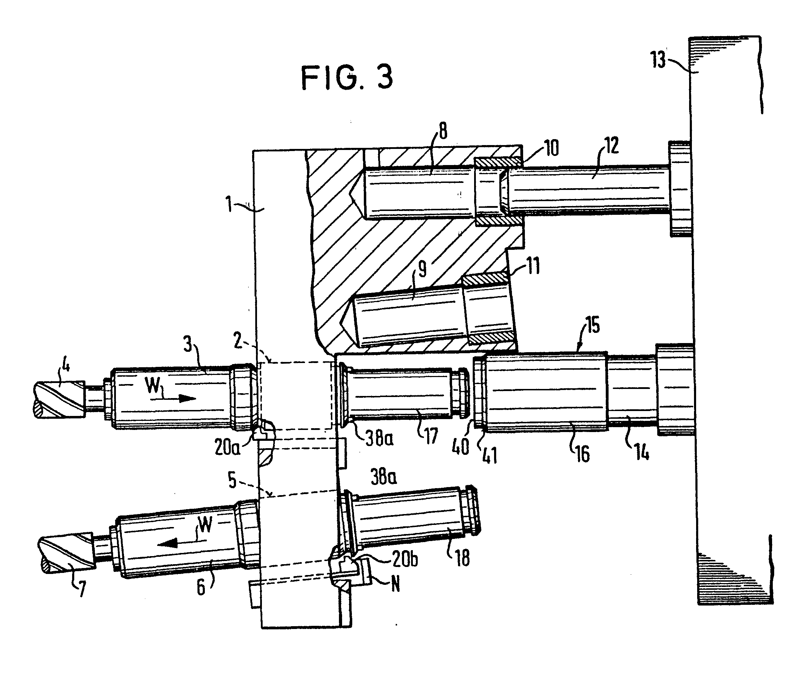

In den Fig. 1 und 3 ist ein Werkzeugträger 1 dargestellt, der im wesentlichen als Platte ausgebildet ist, in der in zwei übereinander angeordneten, senkrecht zur Zeichnungsebene verlaufenden Reihen eine Anzahl von Aufnahmeöffnungen angeordnet ist. Im vorliegenden Ausführungsbeispiel dienen die oberen Aufnahmeöffnungen 2 zur Aufnahme von Werkzeughaltern 3, welche mit neuen Werkzeugen 4 bestückt sind, während die unteren Aufnahmeöffnungen 5 zur Aufnahme von Werkzeughaltern 6 dienen, die mit gebrauchten Werkzeugen 7 bestückt sind.

Wie aus den Fig. 1 und 3 ferner hervorgeht, weist die obere Hälfte des Werkzeugträgers 1 Sackbohrungen 8 und 9 auf, die jeweils in ihrem Mündungsbereich mit Führungsbüchsen 10 und 11 ausgestattet sind. Diese Führungsbüchsen 10 und 11 arbeiten mit einer Führungsstange 12 zusammen, die an einer Spindeleinheit 13 befestigt ist, welche eine Anzahl von Bearbeitungsspindeln 14 trägt, die ebenfalls senkrecht zur Zeichnungsebene hintereinander angeordnet sind.

Gegenüber der Spindeleinheit 13 befindet sich der Werkzeugträger 1 in seiner Wechselstellung. Die Lagerung des Werkzeugträgers 1 sowie dessen Bewegung von der Wechselstellung in die Bestückungsstellung einschliesslich der Wirkungsweise der Führungsbüchsen und der Führungsstangen ist in der EP-A-0 111 046 im einzelnen beschrieben. Erwähnt sei deshalb lediglich, dass die Anordnung der Führungsbüchsen 10 und 11 in bezug auf die Führungsstange 12 derart getroffen ist, dass dann die Führungsstange 12 in der Führungsbüchse 10 ruht, die Achse der Bearbeitungsspindel 14 genau mit der Achse des Werkzeughalters 3 für die neuen Werkzeuge 4 fluchtet (vgl. Fig. 1 und 3). Ruht dagegen die Führungsstange 12 in der Führungsbüchse 11, so fluchtet die Achse der Bearbeitungsspindel 14 genau mit der Achse des Werkzeughalters 6 mit den gebrauchten Werkzeugen 7.

Die Bearbeitungsspindel 14 trägt an ihrem freien Ende eine herkömmliche Schnellwechselaufnahme 15, welche mit einer Betätigungshülse 16 umgeben ist, mit der in herkömmlicher Weise durch ein axiales Verschieben in Richtung der Spindeleinheit 13 die Ankopplung gelöst werden und der innerhalb der Schnellwechselaufnahme angeordnete Auswerfer in Funktion treten kann.

An seinem den Werkzeugen 4 bzw. 7 jeweils entgegengesetzten Ende besitzt jeder Werkzeughalter 3 bzw. 6 einen Schaft 17 bzw. 18, der in herkömmlicher Weise genau auf die Schnellwechselaufnahme 15 abgestimmt ist.

Erfindungsgemäss können die Werkzeughalter 3 bzw. 6 durch die Aufnahmeöffnungen 2 bzw. 5 im Werkzeugträger 1 lediglich in einer Richtung, der sogenannten Wechselrichtung hindurchgeschoben werden. Diese Wechselrichtung ist in allen Figuren jeweils mit Pfeilen W gekennzeichnet.

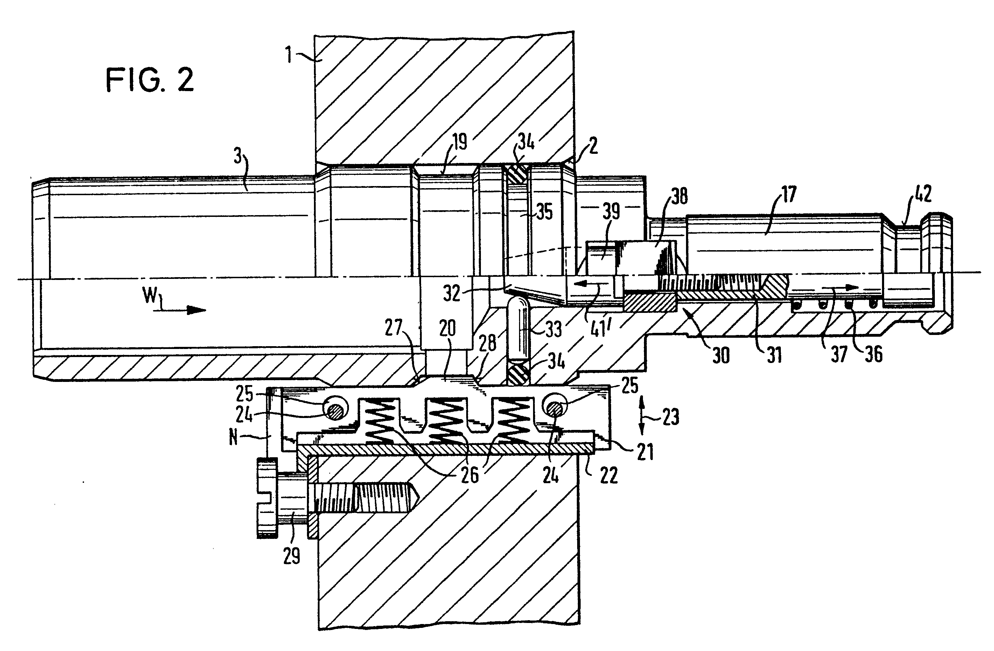

Bei dem in den Fig. 1 und 2 dargestellten bevorzugten Ausführungsbeispiel besitzt der Werkzeughalter jeweils eine Ringnut 19, die zwischen dem Schaft und demjenigen Teil des Werkzeughalters angeordnet ist, der zur Aufnahme der Werkzeuge 4 bzw. 7 dient.

Diese Ringnut 19 arbeitet mit einem Haltenocken 20 zusammen, der – wie aus Fig. 2 hervorgeht – auf der Oberseite einer Leiste 21 angeordnet ist, die in einem Einsatz 22 derart geführt ist, dass sie in Richtung des Pfeiles 23 auf- und abbewegt werden kann. Der Weg der Leiste 21 wird dabei von im Einsatz 22 angeordneten Stiften 24 begrenzt, die durch Öffnungen 25 der Leiste 21 hindurchragen.

Im Ausführungsbeispiel gemäss Fig. 2 ist die Leiste 21 mittels drei im Einsatz 22 gelagerten Federn 26 beaufschlagt, die bestrebt sind, den Haltenocken 20 in die Ringnut 19 des Werkzeughalters einzuschieben.

Der Haltenocken 20 besitzt in bezug auf die Wechselrichtung W auf seiner Vorderseite eine Aufgleitschräge 27 und auf seiner Rückseite eine Sperrfläche 28.

Die Winkel der Seitenwände der Ringnut 19 des Werkzeughalters und die Winkel der Aufgleitschräge 27 sowie der Sperrfläche 28 des Haltenockens 20 sind derart gewählt, dass ein Durchschieben des Werkzeughalters durch die Aufnahmeöffnung im Werkzeugträger 1 in Wechselrichtung W möglich, in der Gegenrichtung jedoch gesperrt ist.

Der Einsatz 22 ist in einer Bohrung oder Durchbrechung des Werkzeugträgers 1 angeordnet, die sich im wesentlichen parallel zur Aufnahmeöffnung für den Werkzeughalter erstreckt, jedoch derart nahe an diese herangerückt ist, dass lediglich der federnde Haltenocken 20 im ausgefahrenen Zustand in die Aufnahmeöffnung für den Werkzeughalter hineinragt. Die Befestigung des Einsatzes 22 in dieser Bohrung oder Durchbrechung des Werkzeugträgers 1 erfolgt über eine Schraube 29. Über die Schraube ist der Einsatz 22 noch mit einer Aufstossnase N ausgerüstet, deren Funktion noch beschrieben werden wird. Wie aus Fig. 1 hervorgeht, ist ein Einsatz 22 nicht nur im Bereich der Aufnahmeöffnungen 2, sondern auch im Bereich der Aufnahmeöffnungen 5 angeordnet. Der Unterschied in der Anordnung besteht lediglich darin, dass der Einsatz 22 für die mit gebrauchten Werkzeugen 7 ausgestatteten Werkzeughalter 6 derart in seiner Bohrung oder Durchbrechung im Werkzeugträger 1 angeordnet ist, dass die Schraube 29 einschliesslich der Aufstossnase N und damit die mit der Aufgleitschräge 27 versehene Vorderseite des federnden Haltenockens 20 auf der den Spindeln 14 zugewandten Seite des Werkzeugträgers 1 angeordnet ist. Auf diese Weise ergibt sich für die Werkzeughalter 3 mit den neuen Werkzeugen 4 eine Wechselrichtung W in Richtung auf die Bearbeitungsspindeln 14 zu, während die Wechselrichtung W für die mit den gebrauchten Werkzeugen 7 bestückten Werkzeughalter 6 von den Bearbeitungsspindeln 14 weg gerichtet ist.

Wie aus fig. 2 hervorgeht, ist der Werkzeughalter 3 mit einer Einrichtung 30 ausgestattet, die eine Drehbewegung des Werkzeughalters in der jeweiligen Aufnahmeöffnung des Werkzeugträgers in einem bestimmten Zustand blockiert. In der gleichen Weise wie die Werkzeughalter 3 sind auch die Werkzeughalter 5 mit einer derartigen Einrichtung ausgestattet.

Im vorliegenden Ausführungsbeispiel besteht die Einrichtung 30 zum Blockieren der Drehbewegung des Werkzeughalters aus einer Klemmeinrichtung, welche einen innerhalb des Schaftes 17 in dessen Achsrichtung hin- und herbewegbaren Stössel 31 umfasst, der über eine Schräge auf Klemmittel einwirkt, die sich kraftschlüssig an der Innenfläche der Aufnahmeöffnung abstützen. Die Schräge besteht im vorliegenden Ausführungsbeispiel aus einem konischen Kopf 32 des Stössels 31, der auf Druckelemente in Form von Druckstiften 33 einwirkt, die an die Innenseite eines O-Ringes 34 angreifen, der in einer Ringnut 35 des Werkzeughalters 3 ruht.

Der Stössel 31 ist mittels einer Druckfeder 36 in Richtung des Pfeils 37 beaufschlagt und mit Mitnahmenasen 38 verbunden, die im Schaft 17 des Werkzeugträgers in dessen Achsrichtung in einer Nut 39 verschiebbar gelagert sind.

Die Mitnahmenasen 38 sind in ihren Abmessungen auf Ausnehmungen abgestimmt, die in den Schnellwechselaufnahmen 15 der Bearbeitungsspindeln 14 in herkömmlicher Weise angeordnet sind und die die formschlüssige Verbindung zwischen den Werkzeughaltern und den Bearbeitungsspindeln im angekoppelten Zustand herstellen, wie später noch beschrieben wird.

Ein Werkzeugwechselvorgang mit einer Werkzeugmaschine nach den Fig. 1 und 2 läuft nun in folgender Weise ab:

Sobald der Bearbeitungsvorgang abgeschlossen ist, werden die mit den gebrauchten Werkzeugen bestückten Bearbeitungsspindeln 14 durch Zurückfahren der Spindeleinheiten 13 zurückgezogen. Im Anschluss daran wird der Werkzeugträger 1 aus seiner nicht dargestellten Bestückungsstellung in die Wechselstellung vor den Bearbeitungsspindeln geschwenkt, wie dies in der EP-A-0 111 046 der Anmelderin eingehend beschrieben ist. In diesem Stadium sind die Aufnahmeöffnungen 5 im Werkzeugträger 1 leer, während in den Aufnahmeöffnungen 2 bereits mit neuen Werkzeugen 4 bestückte Werkzeughalter 3 angeordnet sind. Der Werkzeughalter 1 wird dann mit den leeren Aufnahmeöffnungen 5 über die noch mit den Bearbeitungsspindeln 14 gekoppelten gebrauchten Werkzeuge 7 geschoben, bis der federnde Haltenocken 20 kurz vor der Ringnut 19 des Werkzeughalters 6 zu liegen kommt. In der letzten Phase dieser Bewegung hat die Aufstossnase N die Stirnfläche 41 der Betätigungshülse 16 der Schnellwechselaufnahme 15 zurückgeschoben und somit die nicht dargestellten Kugelverrastung innerhalb der Schnellwechselaufnahme 15 gelöst. Der in der Schnellwechselaufnahme angeordnete Auswerfer kann in Aktion treten, wodurch der Werkzeughalter 6 einen bestimmten Betrag in Richtung des Pfeiles W ausgeschoben wird, bis der federnde Haltenocken 20 in die Ringnut 19 einrastet, so dass der mit dem gebrauchten Werkzeug 7 bestückte Werkzeughalter 6 in der Aufnahmeöffnung 5 des Werkzeugträgers 1 sicher gehaltert ist. Da – wie eingangs beschrieben – aufgrund der Verrastung mit dem federnden Haltenocken 20 der Werkzeughalter 6 nicht mehr gegen die Wechselrichtung W aus dem Werkzeugträger 1 herausgezogen werden kann, ist es lediglich erforderlich, die Spindeleinheit 13 von dem Werkzeugträger 1 wegzufahren, um auf diese Weise die Werkzeughalter 6 aus den Schnellwechselaufnahmen 15 der Bearbeitungsspindeln 14 herauszuziehen.

Die genaue Ausrichtung der Aufnahmeöffnung 5 des Werkzeugträgers 1 bei dem im vorangegangenen beschriebenen Entnahmevorgang erfolgte durch die Führungsstangen 12, die während dieses Vorganges in die Führungsbüchsen 11 hineinragen.

Durch das Zurückfahren der Spindeleinheit 13 gelangen die Führungsstangen 12 ausser Eingriff mit den Führungsbüchsen 11, so dass der Werkzeugträger 1 in die in Fig. 1 dargestellte Stellung abgesenkt werden kann. In dieser Stellung wird dann die Spindeleinheit 13 erneut in Richtung des Werkzeugträgers 1 verfahren, wobei die Führungsstangen 12 in die Führungsbüchsen 10 eingreifen und auf diese Weise die Achsen der Bearbeitungsspindeln 14 genau mit den Achsen der die neuen Werkzeuge 4 tragenden Werkzeughalter 3 ausrichten. Die Spindeleinheit 13 wird dann weiter in Richtung des Werkzeugträgers 1 verfahren, so dass sich die Schnellwechselaufnahmen 15 über die Schäfte 17 der Werkzeughalter 3 schieben. Dieser Aufschiebevorgang, bei dem die Bearbeitungsspindeln mit geringer Drehzahl rotieren, wird nun weiter fortgesetzt, bis die Stirnflächen 40 der Schnellwechselaufnahmen 15 mit den Mitnahmenasen 38 der Werkzeughalter 3 in Kontakt gelangen. Von diesem Zeitpunkt an sind für den Ablauf des Ankoppelungsvorganges drei Möglichkeiten denkbar:

1. Die Stirnfläche 40 trifft auf die Mitnahmenase 38 und schleift an deren Seitenflächen während des weiteren Aufschiebevorganges entlang. Die Mitnahmenase 38 wird dabei gegen die Kraft der Feder 36 in der Nut 39 in Richtung auf den Werkzeugträger 1 zu verschoben, da der Werkzeughalter 3 als Ganzes aufgrund der Wirkung der Sperrfläche 28 des Haltenockens 20 nicht aus der Aufnahmeöffnung 2 des Werkzeugträgers 1 herausgedrückt werden kann. Aufgrund des Entlangschleifens der Stirnfläche 40 an der Mitnahmenase 38 beginnt sich der Werkzeughalter 3 in der Aufnahmeöffnung 2 zu drehen, so dass der Gleitvorgang der Mitnahmenase 38 auf der Stirnfläche 40 der Schnellwechselaufnahme 15 unterbrochen wird. Aufgrund der Verschiebebewegung der Mitnahmenase 38 wird jedoch der Stössel 31 und damit dessen konischer Kopf 32 in Richtung des Pfeiles 41 verschoben, wodurch sich die Druckstifte 33 radial nach aussen bewegen und den O-Ring 34 an der Innenfläche der Aufnahmeöffnung 2 anpressen. Aufgrund der damit verbundenen Reibung wird die Drehbewegung des Werkzeughalters 3 in der Aufnahmeöffnung 2 blockiert, so dass die Stirnfläche 40 der Schnellwechselaufnahme 15 weiter über die Seitenfläche der Mitnahmenase 38 gleitet, bis die Mitnahmenase 38 in die Ausnehmung der Stirnfläche 40 einrastet und die formschlüssige Verbindung zwischen der Schnellwechselaufnahme und dem Werkzeughalter hergestellt ist. Bei diesem Einrastvorgang der Mitnahmenase 38 in die Ausnehmung der Schnellwechselaufnahme 15 verschiebt die Feder 36 den Stössel 31 und damit den mit diesem verbundenen konischen Kopf 32 wieder in die in Fig. 2 gezeigte Ausgangslage zurück, so dass die Druckstifte 33 radial nach innen ausweichen können und der O-Ring 34 zurückweichen kann. Dadurch wird die Blockierwirkung aufgehoben, so dass sich der Werkzeughalter 3 ungehindert in der Aufnahmeöffnung 2 des Werkzeugträgers 1 verdrehen kann.

Im Verlaufe des oben beschriebenen Vorganges erfassen die innerhalb der Schnellwechsel-

aufnahme angeordneten Kugeln (nicht darge-stellt) die Ringnut 42 am freien Ende des Schaftes 17 des Werkzeughalters 3, so dass die vollständige Verbindung zwischen den Arbeitsspindeln 14 und den mit neuen Werkzeugen bestückten Werkzeughaltern 3 hergestellt ist.

2. Die Reibungsverhältnisse zwischen der Seitenfläche der Mitnahmenase 38 und der Stirnfläche 40 der Schnellwechselaufnahme 15 sind derart, dass sich der Werkzeughalter 3 nicht oder nur geringfügig in der Aufnahmeöffnung 2 verdreht. In diesem Falle schnappen die Mitnahmenasen 38 bereits nach einer halben Umdrehung der Bearbeitungsspindeln in die Ausnehmungen der Schnellwechselaufnahme 15 ein, so dass die oben beschriebene Einrichtung 30 zum Blockieren der Drehbewegung der Werkzeughalter 3 in den Aufnahmeöffnungen 2 der Werkzeugträger 1 nicht zum Einsatz kommt. Die endgültige Ankoppelung des Werkzeughalters 3 an die Bearbeitungsspindel 14 erfolgt dann in der oben unter 1. beschriebenen Weise.

3. Die Stirnfläche 40 der Schnellwechselaufnahme 15 gelangt zu einem Zeitpunkt mit den Mitnahmenasen 38 in Kontakt, in dem die Ausnehmungen in den Stirnflächen mit den Mitnahmenasen 38 fluchten. In diesem seltenen Fall erfassen die Ausnehmungen sofort die Mitnahmenasen 38, so dass auch hier die Einrichtung 30 zum Blockieren der Drehbewegung der Werkzeughalter nicht in Aktion tritt.

Ist der Ankoppelungsvorgang abgeschlossen, so wird die Spindeleinheit 13 gegenüber dem Werkzeugträger 1 zurückgezogen. Aufgrund der Wirkung der Aufgleitschräge 27 wird der federnde Haltenocken 20 nach unten gedrückt, so dass dieser ausser Eingriff mit der Ringnut 19 des Werkzeughalters gelangt und dieser in Wechselrichtung W aus der Aufnahmeöffnung 2 des Werkzeugträgers 1 herausgezogen werden kann. Im Verlaufe dieses Herausziehvorganges gelangen auch die Führungsstangen 12 ausser Eingriff mit den Führungsbüchsen 10, so dass der Werkzeugträger 1 aus seiner Wechselstellung in die nicht dargestellte Bestückungsstellung zurückgeschwenkt werden kann, in der die in den Aufnahmeöffnungen 5 ruhenden Werkzeughalter 6 mit den gebrauchten Werkzeugen 7 entnommen und die nunmehr leeren Aufnahmeöffnungen 2 mit neuen Werkzeughaltern 3 mit neuen Werkzeugen 4 bestückt werden können.

Bei dem in den Fig. 3 bis 5 dargestellten Ausführungsbeispiel besitzen die Werkzeughalter einen Bund 43, dessen Seitenflächen in Form von Aufgleitschrägen ausgebildet sind. An den Bund 43 schliesst sich auf der dem Schaft 17 bzw. 18 zugewandten Seite eine Abstufung 44 an, an der eine Büchse 45 mit ihrer einen Stirnfläche anliegt. Die Büchse 45 weist auf ihrer Innenseite eine Abstufung 46 auf, in der eine den Schaft 17 bzw. 18 umgebende Druckfeder 47 angeordnet ist, die sich mit ihrem dem Bund 43 abgewandten Ende an einer Federbüchse 48 abstützt, die ihrerseits mit ihrer anderen Stirnfläche an fest mit dem Schaft verbundenen Mitnahmenasen 38a anliegt.

Die Büchse 45 ist auf dem Schaft des Werkzeughalters gegen die Kraft der Feder in Richtung der Federbüchse 48 verschiebbar. Sie besitzt auf ihrer Innenseite eine Ringnut 49, an die sich im vorliegenden Ausführungsbeispiel insgesamt vier jeweils 90° zueinander versetzte Längsnuten 50 anschliessen.

Die Büchse 45 besitzt ferner auf ihrer Aussenseite Ausnehmungen 51, deren Aufgabe später noch beschrieben wird.

Innerhalb des Schaftes 17 bzw. 18 ist eine Raste 52 angeordnet. Diese Raste 52 besteht aus einem Kugelkopf 53, der federbeaufschlagt in einer Bohrung 54 einer Hülse 55 gelagert ist, die mittels eines Aussengewindes in ein Innengewinde einer quer durch den Schaft verlaufenden Bohrung 56 eingeschraubt ist.

Im Normalfall ruht der Kugelkopf 53 in der Ringnut 49 der Büchse 45, so dass die Büchse 45 frei auf dem Schaft 17 bzw. 18 des Werkzeughalters 3 bzw. 6 verdreht werden kann.

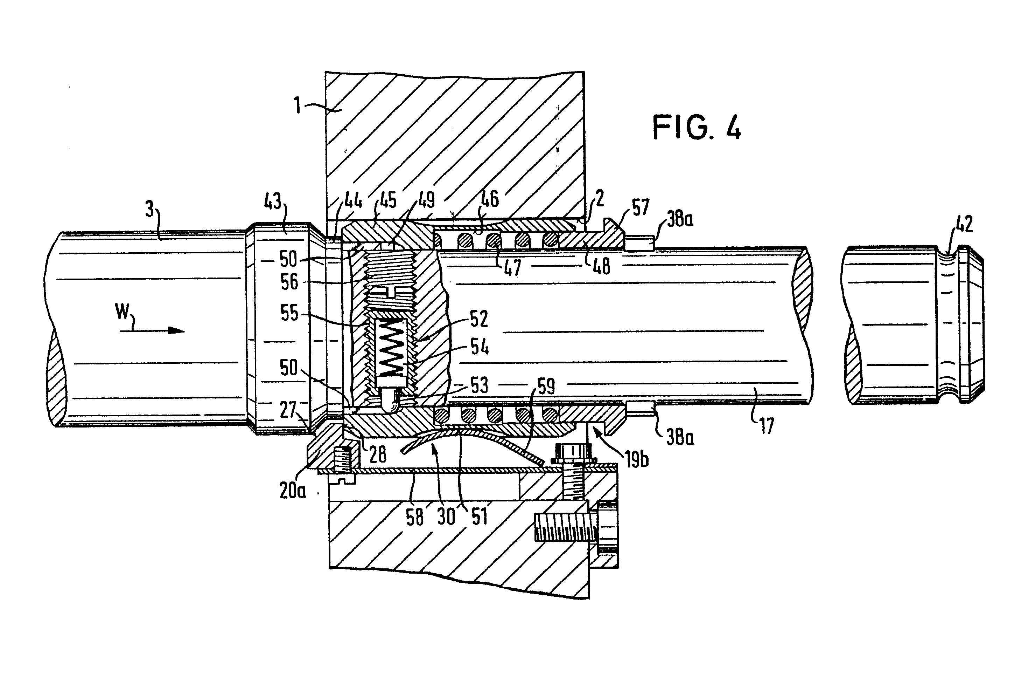

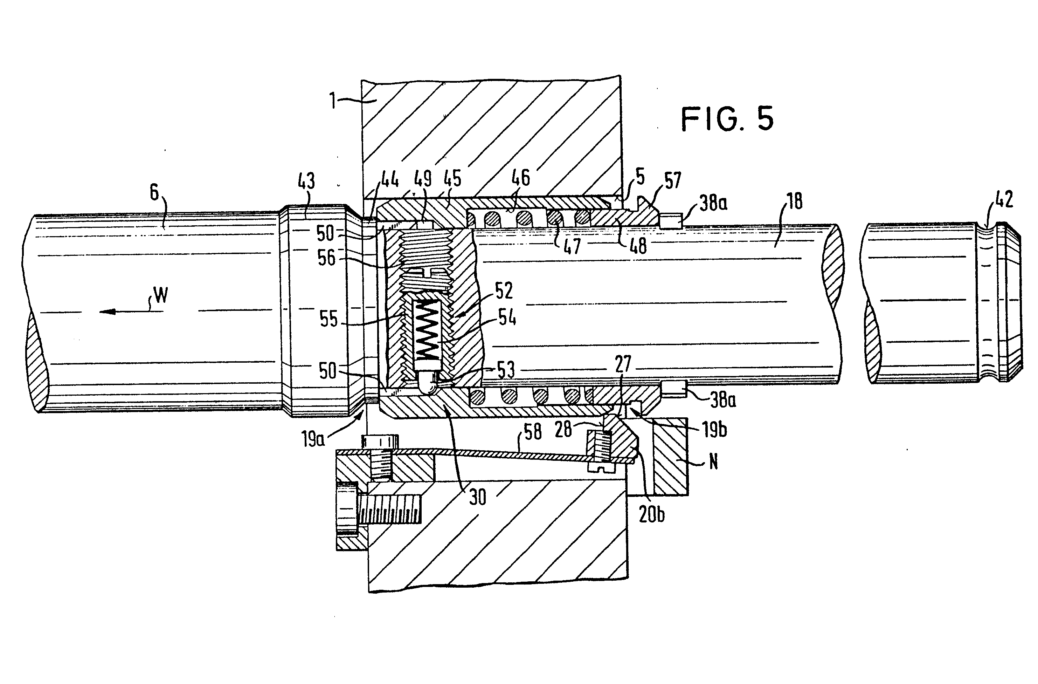

Bei dem in den Fig. 3 bis 5 dargestellten Ausführungsbeispiel besitzt jeder Werkzeughalter insgesamt zwei im Abstand angeordnete Ringnuten 19a und 19b. Wie aus den Fig. 4 und 5 hervorgeht, wird die Ringnut 19a einerseits vom Bund 43 des Werkzeughalters und andererseits von der diesem zugewandten Stirnfläche der Büchse 45 gebildet.

Die Ringnut 19b wiederum wird von der gegenüberliegenden Stirnfläche der Büchse 45 sowie von einem Bund 57 der Federbüchse 48 gebildet.

Wie aus den Fig. 4 und 5 hervorgeht, greifen in die Ringnuten 19a und 19b Haltenocken 20a und 20b ein, die – wie das in den Fig. 1 und 2 dargestellte Ausführungsbeispiel – in Wechselrichtung W jeweils auf ihrer Vorderseite mit einer Aufgleitschräge 27 und auf ihrer Rückseite mit einer Sperrfläche 28 ausgestattet sind.

Die Haltenocken 20a und 20b sind jeweils am freien Ende einer Federzunge 58 befestigt, deren anderes Ende fest mit dem Werkzeughalter 1 verbunden ist.

Wie im ersten Ausführungsbeispiel, werden die Aufnahmeöffnungen auch im vorliegenden Ausführungsbeispiel von Durchgangsbohrungen im Werkzeugträger 1 gebildet. Die Haltenocken 20a und 20b einschliesslich der Federzungen 58 und deren Befestigungsmittel wiederum sind in Durchbrechungen gelagert, die im wesentlichen parallel zur Durchgangsbohrung in den plattenartigen Werkzeugträger 1 angeordnet sind und in ihrem Randbereich in die Durchgangsbohrung einmünden, so dass die oberen Enden der Haltenocken 20a bzw. 20b in den lichten Querschnitt der als Durchgangsbohrungen ausgebildeten Aufnahmeöffnungen 2 und 5 des Werkzeugträgers 1 hineinragen.

Im Falle der den Werkzeughalter 3 mit den neuen Werkzeugen 4 tragenden Aufnahmeöffnung 2 ist der federnde Haltenocken 20a derart angeordnet, dass er in die Ringnut 19a eingreift, sofern die Büchse 45 des Werkzeughalters 3 in ihrer richtigen Stellung innerhalb der Aufnahmeöffnung 2 liegt. In dieser Stellung der Büchse liegt eine federnde Umfangsraste 59 auf der Aussenfläche der Büchse 45 auf, welche in die Ausnehmung 51 der Büchse einrastet, sofern sich diese gegenüber der Umfangsraste 59 verdreht.

Im Falle der die Werkzeughalter 6 mit den gebrauchten Werkzeugen 7 tragenden Aufnahmeöffnung 5 ist der federnde Haltenocken 20b derart angeordnet, dass er mit der Ringnut 19b zusammenarbeitet. Im Bereich des federnden Haltenockens 20b ist ferner auf der den Bearbeitungsspindeln 14 zugewandten Seite des Werkzeugträgers 1 eine Aufstossnase N angeordnet, die die bereits zum ersten Ausführungsbeispiel beschriebene Aufgabe hat.

Im Prinzip läuft der Werkzeugwechselvorgang bei dem in den Fig. 3 bis 5 dargestellten Ausführungsbeispiel in der gleichen Weise ab wie bei dem in den Fig. 1 und 2 dargestellten Ausführungsbeispiel. Um Wiederholungen zu vermeiden, werden daher im folgenden lediglich diejenigen Funktionen beschrieben, die sich von dem in den Fig. 1 und 2 dargestellten Ausführungsbeispiel unterscheiden.

Sollen die mit den gebrauchten Werkzeugen 7 ausgestatteten Werkzeughalter 6 ausgewechselt werden, so werden diese – wie oben bereits beschrieben – in die Aufnahmeöffnungen 5 des Werkzeugträgers 1 eingeschoben, bis sie die in Fig. 5 dargestellte Stellung einnehmen. In dieser Stellung liegt der federnde Haltenocken 20b auf der Schräge der Ringnut 19b. Tritt nun der in der Schnellwechselaufnahme vorhandene Auswerfer aufgrund der Einwirkung der Aufstossnase N auf die Betätigungshülse 16 in Funktion, so wird der Werkzeughalter 6 ausgestossen, so dass der federnde Umfangsnocken 20b in der Ringnut 19b zu liegen kommt. Damit ist der Werkzeughalter 6 fest im Werkzeugträger 1 gehalten. Wird die Spindeleinheit 13 dann zurückgezogen, verhindert der federnde Haltenocken 20b, dass der Werkzeughalter 6 entgegen der Werkzeugwechselrichtung W aus dem Werkzeugträger herausgezogen werden kann.

Soll nun die leere Bearbeitungsspindel 14 mit einem neuen Werkzeughalter 3 bestückt werden, so fährt die Spindeleinheit 13 – wie oben beschrieben – in Richtung des Werkzeugträgers 1, bis die Stirnfläche 40 der Schnellwechselaufnahme 15 an den Mitnahmenasen 38a zur Anlage gelangt. Da die Mitnahmenasen 38a bei diesem Ausführungsbeispiel fest mit dem Schaft des Werkzeughalters verbunden sind, wird der Werkzeughalter 3 entgegen der Wechselrichtung W um einen bestimmten Betrag durch die Aufnahmeöffnung 2 geschoben. Da jedoch bei diesem Vorgang der federnde Haltenocken 20a mittels seiner Sperrfläche 28 verhindert, dass sich die Büchse innerhalb der Aufnahmeöffnung 2 verschiebt, wird der Kugelkopf 53 der Raste 52 aus der Ringnut 49 auf der Innenseite der Büchse 45 ausgehoben und in den Bereich der Längsnuten 50 verlagert. Sofern sich bei diesem Vorgang die Längsnuten gerade in der Höhe des Kugelkopfes 53 befinden, gleitet der Kugelkopf 53 lediglich aus der Ringnut 49 in die jeweilige Längsnut 50 hinein.

Wird nun der Werkzeughalter 3 aufgrund der über die Mitnahmenasen 38a schleifenden Stirnfläche 40 der Schnellwechselaufnahme 15 mitgenommen, so nimmt die Raste 52 mit ihrem Kugelkopf 53 die Büchse 45 mit, wodurch sich diese innerhalb der Aufnahmeöffnung 2 verdreht. Diese Drehbewegung der Büchse 45 wird blockiert, sobald die federnde Umfangsraste 59 in die Ausnehmung 51 auf der Aussenseite der Büchse 45 eingreift. Da der Schaft 17 des Werkzeughalters 3 durch die Raste 52 in dieser Phase drehfest mit der Büchse 45 verbunden ist, wird auch ein Mitdrehen der Mitnahmenasen 38a blockiert, so dass die Stirnfläche 40 der Schnellwechselaufnahme 15 wieder über die Seitenflächen der Mitnahmenasen 38 entlangschleifen, bis sie mit ihren Ausnehmungen in die Mitnahmenasen 38a einrasten. Bei diesem Einrastvorgang gleitet der Kugelkopf 53 aus dem Bereich der Längsnut 50 wieder zurück in die Ringnut 49, so dass sich der Schaft 17 wieder frei innerhalb der Büchse 45 verdrehen kann.

Wie zum ersten Ausführungsbeispiel bereits beschrieben, können die Reibungsverhältnisse zwischen der Aufnahmeöffnung 2, der Büchse 45 und dem Schaft 17 derart gelagert sein, dass die Mitnahmenasen 38a beim Entlangschleifen der Stirnfläche 40 der Schnellwechselaufnahme 15 nicht mitgenommen werden. In einem solchen Fall tritt die oben beschriebene Einrichtung zum Blockieren der Drehbewegung des Werkzeughalters 3 in der Aufnahmeöffnung 2 nicht in Funktion.

**Patentansprüche**

1. Werkzeugmaschine mit einer Anzahl von Bearbeitungsspindeln (14), die Schnellwechselaufnahmen (15) für Werkzeuge (4, 7) tragende Werkzeughalter (3, 6) besitzen, welche mit den Schnellwechselaufnahmen in Drehrichtung über Mitnahmenasen formschlüssig kuppelbar sind, mit einer Werkzeugwechseleinrichtung, welche mit einem Werkzeugträger (1) zur Aufnahme der die gebrauchten Werkzeuge (7) und die neuen Werkzeuge (4) tragenden Werkzeughalter (3 bzw. 6) ausgestattet ist, der von einer Bestückungsstellung in eine Wechselstellung vor den Bearbeitungsspindeln bewegbar ist und jeweils eine der Anzahl der Bearbeitungsspindeln (14) entsprechende Anzahl von Aufnahmeöffnungen (5) für die gebrauchten Werkzeuge (7) und eine entsprechende Anzahl von Aufnahmeöffnungen (2) für die neuen Werkzeuge (4) aufweist, dadurch gekennzeichnet,

– dass die mit den Werkzeugen (4, 7) bestückten Werkzeughalter (3, 6) durch die Aufnahmeöffnungen (2, 5) der Werkzeugträger (1) jeweils nur in einer, d.h. der für den Wechselvorgang erforderlichen Wechselrichtung (W) hindurchschiebbar und in ihrer Ab- bzw. Ankoppelungsstellung in den Aufnahmeöffnungen derart gehalten sind, dass ein Durchschieben gegen die Wechselrichtung gesperrt ist,

– dass zumindest bei den die neuen Werkzeuge (4) tragenden Werkzeughaltern (3) die Mitnahmenasen (38, 38a) gegenüber dem Werkzeugträger (1) einen begrenzten Weg gegen die Wechselrichtung (W) entgegen der Kraft einer Feder (36, 47) zurückschiebbar sind, und

– dass eine Einrichtung (30) vorgesehen ist, die eine Drehbewegung der Werkzeughalter (3) in den Aufnahmeöffnungen (2) der Werkzeugträger (1) im zurückgeschobenen Zustand der Mitnahmenasen (38, 38a) blockiert.

2. Werkzeugmaschine nach Anspruch 1, dadurch gekennzeichnet, dass zur Halterung der Werkzeughalter (3, 6) in der Ab- bzw. Ankoppelstellung in den Aufnahmeöffnungen (2, 5) sowie zur Sperre der Durchschubbewegung gegen die Wechselrichtung (W) eine Rastanordnung vorgesehen ist.

3. Werkzeugmaschine nach Anspruch 2, dadurch gekennzeichnet, dass die Rastanordnung aus mindestens einem mit dem Werkzeugträger (1) verbundenen federnden Haltenocken (20, 20a, 20b) besteht, der in eine Ringnut (19, 19a, 19b) am Werkzeughalter (3, 6) aushebbar eingreift.

4. Werkzeugmaschine nach Anspruch 3, dadurch gekennzeichnet, dass der federnde Haltenocken (20, 20a, 20b), bezogen auf die Wechselrichtung (W), auf seiner Vorderseite eine Aufgleitschräge (27) und auf seiner Rückseite eine Sperrfläche (28) aufweist.

5. Werkzeugmaschine nach Anspruch 4, dadurch gekennzeichnet, dass der federnde Haltenocken (20) in einem Einsatz (22) angeordnet ist, der in einer Aussparung neben der Aufnahmeöffnung (2) im Werkzeugträger (1) befestigt ist.

6. Werkzeugmaschine nach Anspruch 5, dadurch gekennzeichnet, dass der Einsatz (22) wahlweise derart in der Aussparung befestigbar ist, dass die Sperrfläche (28) des Haltenockens (20) den Bearbeitungsspindeln (14) zu- oder abgewandt ist.

7. Werkzeugmaschine nach Anspruch 3 bis 6, dadurch gekennzeichnet, dass jeder Werkzeughalter eine Ringnut (19) aufweist und die Haltenocken (20) aller Aufnahmeöffnungen (2, 5) des Werkzeugträgers (1) in einer Ebene liegen.

8. Werkzeugmaschine nach Anspruch 3 und 4, dadurch gekennzeichnet, dass jeder Werkzeughalter (3, 6) zwei im Abstand nebeneinander angeordnete Ringnuten (19a, 19b) aufweist und die Haltenocken (20a) der Aufnahmeöffnungen (2) für die mit neuen Werkzeugen (4) bestückten Werkzeughalter (3) in einer ersten und die Haltenocken (20b) der Aufnahmeöffnungen (5) für die mit gebrauchten Werkzeugen (7) bestückten Werkzeughalter (6) in einer zweiten Ebene liegen.

9. Werkzeugmaschine nach Anspruch 1 bis 8, dadurch gekennzeichnet, dass die Einrichtung (30) zum Blockieren der Drehbewegung des Werkzeughalters (3) aus einer innerhalb des Schaftes (17) angeordneten, kraft- oder formschlüssig an den Werkzeugträger (1) angreifenden Klemmeinrichtung besteht.

10. Werkzeugmaschine nach Anspruch 9, dadurch gekennzeichnet, dass die Mitnahmenasen (38) im Schaft des Werkzeughalters (3) in dessen Achsrichtung gegen die Wechselrichtung (W) der Werkzeuge einen begrenzten Weg verschiebbar gelagert sind und mit der Klemmeinrichtung in Wirkverbindung stehen.

11. Werkzeugmaschine nach Anspruch 9 und 10, dadurch gekennzeichnet, dass die Klemmeinrichtung eine mit den Mitnahmenasen (38) verbundenen, innerhalb des Schaftes (17) in dessen Achsrichtung hin- und herbewegbaren Stössel (31) umfasst, der über eine Schräge auf Klemmittel einwirkt, die sich kraft- oder formschlüssig an der Innenfläche der Aufnahmeöffnung (2) abstützen.

12. Werkzeugmaschine nach Anspruch 11, dadurch gekennzeichnet, dass die Klemmittel aus einem in einer Ringnut (35) auf der Aussenseite des Werkzeughalters eingesenkten O-Ring (34) bestehen, der über einen oder mehrere mit der Schräge in Verbindung stehende Druckelemente an der Innenfläche der Aufnahmeöffnung (2) anpressbar ist.

13. Werkzeugmaschine nach Anspruch 11 und 12, dadurch gekennzeichnet, dass die Schräge von einem konischen Kopf (32) des Stössels (31) gebildet ist und die Druckelemente als Druckstifte (33) ausgebildet sind.

14. Werkzeugmaschine nach Anspruch 1 bis 8, dadurch gekennzeichnet, dass die Einrichtung (30) zum Blockieren der Drehbewegung des Werkzeughalters (3, 6) aus einer auf dem Schaft des Werkzeughalters drehbar gelagerten und gegenüber dem Werkzeugträger (1) undrehbar festlegbaren Büchse (45) besteht, die über eine im Schaft angeordnete Raste (52) drehfest mit dem Schaft kuppelbar ist.

15. Werkzeugmaschine nach Anspruch 14, dadurch gekennzeichnet, dass die Mitnahmenasen (38a) fest mit dem Werkzeughalter (3, 6) verbunden sind und die Büchse (45) zum begrenzten Zurückschieben der Mitnahmenasen gegen die Wechselrichtung (W) auf dem Schaft gegen die Kraft einer Druckfeder (47) in Achsrichtung des Schaftes verschiebbar gelagert ist.

16. Werkzeugmaschine nach Anspruch 14 und 15, dadurch gekennzeichnet, dass die Büchse (45) auf ihrer Innenseite eine Ringnut (49) sowie mindestens eine senkrecht dazu verlaufende Längsnut (50) aufweist.

17. Werkzeugmaschine nach Anspruch 15 und 16, dadurch gekennzeichnet, dass durch das Verschieben der Büchse (45) die im Schaft gelagerte Raste (52) zum drehfesten Ankuppeln des Schaftes an die Büchse aus der Ringnut (49) aushebbar und in den Bereich der Längsnut (50) verlagerbar ist.

18. Werkzeugmaschine nach Anspruch 14 bis 17, dadurch gekennzeichnet, dass zum undrehbaren Festlegen der Büchse (45) an dem Werkzeugträger (1) eine an diesem befestigte federnde Umfangsraste (59) vorgesehen ist, die in Ausnehmungen (51) an der Aussenseite der Büchse (45) eingreift.

19. Werkzeugmaschine nach Anspruch 16, dadurch gekennzeichnet, dass die Druckfeder (47) den Schaft (17, 18) umgibt und die Büchse (45) zur Aufnahme der Druckfeder auf ihrer Innenseite eine Abstufung (46) aufweist.

20. Werkzeugmaschine nach Anspruch 19, dadurch gekennzeichnet, dass in den durch die Abstufung (46) gebildeten Ringraum eine Federbüchse (48) hineinragt, an deren einer Stirnfläche sich die Druckfeder (47) abstützt und deren andere Stirnfläche am Werkzeughalter anliegt.

21. Werkzeugmaschine nach Anspruch 8 und 14 bis 20, dadurch gekennzeichnet, dass die eine Ringnut (19a) von der einen Stirnfläche der Büchse (45) und einem Bund (43) des Werkzeughalters (3, 6) und die andere Ringnut (19b) von der anderen Stirnfläche der Büchse (45) und einem Bund (57) der Federbüchse (48) gebildet ist.

22. Werkzeugmaschine nach Anspruch 1 bis 21, dadurch gekennzeichnet, dass der Werkzeugträger (1) als Platte ausgebildet ist und die Aufnahmeöffnungen (2, 5) von Durchgangsbohrungen in der Platte gebildet sind, deren Achsen im wesentlichen senkrecht zur Plattenebene verlaufen.

23. Werkzeugmaschine nach Anspruch 5 und 22, dadurch gekennzeichnet, dass die Aussparungen für die den federnden Haltenocken (20) tragenden Einsätze (22) jeweils von einer Bohrung oder Durchbrechung gebildet sind, die im wesentlichen parallel zur Durchgangsbohrung in der Platte verläuft und derart nahe neben der Durchgangsbohrung angeordnet ist, dass sie in ihrem Randbereich in die Durchgangsbohrung einmündet.

24. Werkzeugmaschine nach einem oder mehreren der vorhergehenden Ansprüche, dadurch gekennzeichnet, dass an dem Werkzeugträger (1) auf der den Bearbeitungsspindeln (14) zugewandten Seite dicht neben den Aufnahmeöffnungen (5) für die mit gebrauchten Werkzeugen (7) bestückten Werkzeughalter (6) Aufstossnasen (N) angeordnet sind, durch die die Betätigungshülsen (16) der Schnellwechselaufnahmen (15) zum Auslösen des Auswerfvorganges zurückschiebbar sind.

## Claims

1. Machine tool comprising a plurality of processing spindles (14) which have quick change adapters (15) for tool holders (3, 6) carrying tools (4, 7), which can be coupled by form fit to the quick change adapters in the direction of rotation by means of engagement lugs, comprising a tool exchange device which is provided with a tool carrier (1) for receiving the tool holders (3 or 6) carrying the used tools (7) and the new tools (4), and is movable from a charging position into an exchange position in front of the processing spindles and has a respective plurality of receiving openings (5) for the used tools (7) corresponding to the number of processing spindles (14) and a corresponding number of receiving openings (2) for the new tools (4), characterised in that,

   – the tool holders (3, 6) charged with tools (4, 7) are displaceable through the receiving openings (2, 5) of the tool carriers (1) in each case only in one exchange direction (W), i.e. that necessary for the exchange proceess, and are held in their decoupling or coupling position in the receiving openings in such manner that sliding motion contrary to the exchange direction is prevented,

   – at least for the tool holders (3) carrying the new tools (4), the engagement lugs (38, 38a) are retractable by a limited distance relative to the tool carrier (1) counter to the exchange direction (W) against the force of a spring (36, 47), and

   – an arrangement (30) is provided which blocks rotational movement of the tool holder (3) into the receiving openings (2) of the tool carrier (1) in the retracted condition of the engagement lugs (38, 38a).

2. Machine tool according to claim 1 characterised in that for holding the tool holders (3, 6) in the coupling or decoupling position in the receiving openings (2, 5) as well as for locking the sliding motion counter to the exchange direction (W), a catch arrangement is provided.

3. Machine tool according to claim 2 characterised in that the catch arrangement consists of at least one resilient holding cam (20, 20a, 20b) connected to the tool carrier (1), which holding cam removably engages in an annular groove (19, 19a, 19b) on the tool holder (3, 6).

4. Machine tool according to claim 3 characterised in that the resilient holding cam (20, 20a, 20b) has a lifting slope (27) on its front side, with reference to the exchange direction (W), and as a locking face (28) on its rear side.

5. Machine tool according to claim 4 characterised in that the resilient holding cam (20) is arranged in an insert (22) which is secured in a recess in the tool carrier (1) adjacent the receiving opening (2).

6. Machine tool according to claim 5 characterised in that the insert (22) is securable selectively in the recess in such manner that the locking face (28) of the holding cam (20) faces towards or away from the processing spindles (14).

7. Machine tool according to claims 3 to 6 characterised in that each tool holder has an annular groove (19) and the holding cams (20) of all receiving openings (2, 5) of the tool carrier (1) lie in one plane.

8. Machine tool according to claims 3 and 4, characterised in that each tool holder (3, 6) has two closely mutually spaced annular grooves (19a, 19b) and the holding cams (20a) of the receiving openings (2) for the tool holder (3) charged with new tools (4) lie in a first plane and the holding cam (20b) of the receiving openings (5) for the tool holder (6) charged with used tools (7) lie in a second plane.

9. Machine tool according to claims 1 to 8 characterised in that the arrangement (30) for blocking the rotational motion of the tool holder (3) consists of a clamping device arranged within the shaft (17) and engaging with the tool carrier (1) by form fit or interference fit.

10. Machine tool according to claim 9 characterised in that the engagement lugs (38) in the shaft of the tool holder (3) are mounted for displacement by a predetermined distance in the axial direction against the exchange direction (W) of the tools and are operatively connected to the clamping device.

11. Machine tool according to claims 9 and 10 characterised in that the clamping device comprises a plunger (31) connected to the engagement lugs (38) and movable back and forth within the shaft (17) in its axial direction, which plunger is operated by an incline on clamping means which are supported by form fit or interference fit on the inner surface of the receiving opening (2).

12. Machine tool according to claim 11 characterised in that the clamping means consist of a countersunk O-ring (34) in an annular groove (35) on the exterior of the tool holder, which O-ring is biasable by one or more pressing elements in contact with the incline on the inner surface of the receiving opening (2).

13. Machine tool according to claims 11 and 12 characterised in that the incline is formed from a conical head (32) of the plunger (31) and the pressing elements are configured as pressing pins (33).

14. Machine tool according to claims 1 to 8 characterised in that the device (30) for blocking the rotational motion of the tool holder (3, 6) consists of a bushing (45) rotatably mounted on the shaft of the tool holder and non-rotatably fixable relative to the tool carrier (1), which bushing can be fixed to the shaft by a catch (52) arranged in the shaft.

15. Machine tool according to claim 14 characterised in that the engagement lugs (38a) are firmly connected to tool holder (3, 6) and the bushing (45) is mounted for displacement in the axial direction of the shaft for limited retraction of the engagement lugs in a direction opposite to the exchange direction (W) on the shaft against the force of a pressure spring (47).

16. Machine tool according to claims 14 and 15 characterised in that the bushing (45) has an annular groove (49) on its interior and at least one longitudinal groove (50) extending perpendicular thereto.

17. Machine tool according to claims 15 and 16 characterised in that by displacement of the bushing (45) the catch (52) mounted in the shaft for firmly coupling the shaft to the bushing is removable from the annular groove (49) and displaceable into the region of the longitudinal groove (50).

18. Machine tool according to claims 14 to 17 characterised in that for non-rotatable securing of the bushing (45) on the tool carrier (1), a resilient peripheral catch (59) secured thereto is provided, which engages in recesses (51) on the exterior of the bushing (45).

19. Machine tool according to claim 16 characterised in that the pressure spring (47) surrounds the shaft (17, 18) and the bushing (45) has a cutaway portion (46) for receiving the pressure spring on its interior surface.

20. Machine tool according to claim 19 characterised in that a resilient bushing (48) extends into the annular chamber formed by the cut-away portion (46) on whose one front surface the pressure spring (47) abuts, the other front surface of which contacts the tool holder.

21. Machine tool according to claim 8 and claims 14 to 20 characterised in that the one annular groove (19a) is formed from the one front surface of the bushing (45) and a collar (43) of the tool holder (3, 6) and the other annular groove (19b) is formed from the other front surface of the bushing (45) and a collar (57) of the resilient bushing (48).

22. Machine tool according to claims 1 to 21 characterised in that the tool carrier (1) is configured as a plate and the receiving openings (2, 5) are formed by bores penetrating the plate, whose axes extend substantially perpendicularly to the plane of the plate.

23. Machine tool according to claims 5 and 22 characterised in that the recesses for the inserts (22) carrying the resilient holding cams (20) are each formed from a bore or a passage which extends essentially parallel to the bore in the plate and is arranged near the bore in such manner that it opens into the bore in its peripheral region.

24. Machine tool according to one or more of the preceding claims characterised in that on the tool carrier (1) on the side facing the processing spindles (14) closely adjacent the receiving openings (5) for the tool holder (6) charged with used tools (7), transfer lugs (N) are arranged, by which the activation sleeves (16) of the quick-change adapters (15) can be retracted for initiating the ejection process.

**Revendications**

1. Machine-outil munie de plusieurs broches d'usinage (14) comportant des logements de changement rapide (15) pour des porte-outils (3, 6) qui portent des outils (4, 7) et peuvent être accouplés par emboîtement aux logements de changement rapide dans le sens de la rotation par des talons d'entraînement, d'un dispositif de changement d'outil qui est équipé d'un mandrin (1) destiné à recevoir des porte-outils (3, 6) portant les outils usés (7) et les outils neufs (4), lequel mandrin peut passer d'une position de chargement à une position de changement d'outil devant les broches d'usinage et comporte un nombre d'ouvertures de fixation (5), correspondant au nombre des broches d'usinage (14), pour les outils usés (7), et un nombre correspondant d'ouvertures de fixation (2) pour les outils neufs (4), caractérisée par le fait que les porte-outils (3, 6), munis des outils (4, 7), ne peuvent passer à travers les ouvertures de fixation (2, 5) du mandrin (1) que dans un sens (W), c'est-à-dire dans le sens nécessaire au processus de changement d'outil, et sont maintenus à leur position de désaccouplement ou d'accouplement dans les ouvertures de fixation de telle sorte qu'un déplacement soit interdit dans le sens contraire au changement d'outil, qu'au moins dans les porte-outils (3), portant les outils neufs (4), les talons d'entraînement (38, 38a) peuvent être reculés vis-à-vis du mandrin (1) sur un trajet limité dans le sens contraire du changement d'outil à l'encontre de la force d'un ressort (36, 47) et qu'il est prévu un dispositif (30) qui empêche un mouvement de rotation des porte-outils (3) dans les ouvertures de fixation (2) des mandrins (1) à l'état reculé des talons d'entraînement (38, 38a).

2. Machine-outil selon la revendication 1, caractérisée par le fait qu'il est prévu un dispositif d'encliquetage pour maintenir les porte-outils (3, 6) à la position de désaccouplement ou d'accouplement dans les ouvertures de fixation (2, 5), ainsi que pour le blocage du déplacement dans le sens contraire du changement d'outil (W).

3. Machine-outil selon la revendication 2, caractérisée par le fait que le dispositif d'encliquetage se compose d'au moins un bossage de retenue élastique (20, 20a, 20b) qui est raccordé au mandrin (1) et qui s'engage de façon amovible dans une rainure annulaire (19, 19a, 19b) du porte-outil (3, 6).

4. Machine-outil selon la revendication 3, caractérisée par le fait que le bossage de retenue élastique (20, 20a, 20b) comporte une rampe (27) sur sa face avant et une surface de blocage (28) sur sa face arrière, rapportées au sens du changement d'outil (W).

5. Machine-outil selon la revendication 4, caractérisée par le fait que le bossage de retenue élastique (20) est disposé dans une garniture (22) qui est fixée dans un évidement à côté de l'ouverture de fixation (2) du mandrin (1).

6. Machine-outil selon la revendication 5, caractérisée par le fait que la garniture (22) peut être facultativement fixée dans l'évidement de façon que la surface de blocage (28) du bossage de retenue (20) soit située du côté des broches d'usinage (14) ou du côté opposé à celles-ci.

7. Machine-outil selon les revendications 3 à 6, caractérisée par le fait que chaque porte-outil comporte une rainure annulaire (19) et que les bossages de retenue (20) de toutes les ouvertures de fixation (2, 5) du mandrin (1) se situent dans un même plan.

8. Machine-outil selon les revendications 3 et 4, caractérisée par le fait que chaque porte-outil (3, 6) comporte deux rainures annulaires (19a, 19b) disposées à distance l'une de l'autre et que les bossages de retenue (20a) des ouvertures de fixation (2) pour les porte-outils (3), munis d'outils neufs (4), se situent dans un premier plan, et que les bossages de retenue (20b) des ouvertures de réception (5) pour les porte-outils (6), munis d'outils usés (7), se situent dans un second plan.

9. Machine-outil selon les revendications 1 à 8, caractérisée par le fait que le dispositif (30) pour le blocage du mouvement de rotation du porte-outil (3) se compose d'un appareil de serrage placé à l'intérieur de la queue (17) et agissant sur le mandrin (1) par une liaison par frottement ou emboîtement.

10. Machine-outil selon la revendication 9, caractérisée par le fait que les talons d'entraînement (38) dans la queue du porte-outil (3) sont montés déplaçables sur un trajet limité dans le sens axial de celle-ci et à l'opposé du sens de changement (W) des outils et sont fonctionnellement raccordés à l'appareil de serrage.

11. Machine-outil selon les revendications 9 et 10, caractérisée par le fait que l'appareil de serrage comprend un poussoir (31) qui, raccordé aux talons d'entraînement (38) et pouvant être déplacé en un mouvement de va-et-vient à l'intérieur de la queue (17) dans le sens axial de celle-ci, agit par l'intermédiaire d'une rampe, sur des moyens de blocage qui prennent appui, par une liaison par friction ou par emboîtement, sur la surface interne de l'ouverture de fixation (2).

12. Machine-outil selon la revendication 11, caractérisée par le fait que les moyens de blocage sont constitués par un anneau torique (34) qui est noyé dans une rainure annulaire (35) de la face externe du porte-outil et qui peut être appuyé sur la surface interne de l'ouverture de fixation (2) par ou plusieurs élément(s) de pression raccordé(s) à la rampe.

13. Machine-outil selon les revendications 11 et 12, caractérisée par le fait que la rampe est formée par une tête conique (32) du poussoir (31) et que les éléments de pression sont réalisés sous la forme de tiges d'éjection (33).

14. Machine-outil selon les revendications 1 à 8, caractérisée par le fait que le dispositif (30) pour le blocage du mouvement de rotation du porte-outil (3, 6) se compose d'une douille (45) qui, montée mobile en rotation sur la queue du porte-outil et fixée en rotation vis-à-vis du mandrin (1), peut être accouplée solidairement en rotation à la queue par l'intermédiaire d'un boulon d'arrêt (52) disposé dans la queue.

15. Machine-outil selon la revendication 14, caractérisée par le fait que les talons d'entraînement (38a) sont solidaires du porte-outil (3, 6) et que la douille (45), pour le déplacement limité en arrière des talons d'entraînement dans le sens contraire du changement d'outil (W), est montée déplaçable sur la queue à l'encontre de la force d'un ressort de pression (47) dans le sens axial de la queue.

16. Machine-outil selon les revendications 14 et 15, caractérisée par le fait que la douille (45) sur sa face interne comporte une rainure annulaire (49) ainsi qu'au moins une rainure longitudinale (50) disposée perpendiculairement à celle-ci.

17. Machine-outil selon les revendications 15 et 16, caractérisée par le fait que le déplacement de la douille (45) a pour effet d'extraire de la rainure annulaire (49) le boulon d'arrêt (52) monté dans la queue pour l'accouplement solidaire en rotation de la queue avec la douille, et de l'amener dans la zone de la rainure longitudinale (50).

18. Machine-outil selon les revendications 14 à 17, caractérisée par le fait que, pour la fixation en rotation de la douille (45) sur le mandrin (1), il est prévu un arrêt périphérique élastique (59) qui est fixé sur celle-ci et qui s'engage dans des évidements (51) de la face externe de la douille (45).

19. Machine-outil selon la revendication 16, caractérisée par le fait que le ressort de pression (47) entoure la queue (17, 18) et que la douille (45), pour recevoir le ressort de pression, comporte une excavation (46) sur sa face interne.

20. Machine-outil selon la revendication 19, caractérisée par le fait que dans l'espace annulaire formé par l'excavation (46) fait saillie une douille élastique (48) sur une surface frontale de laquelle s'appuie le ressort de pression (47) et dont l'autre surface frontale vient s'appliquer sur le porte-outil.

21. Machine-outil selon les revendications 8 et 14 à 20, caractérisée par le fait que la rainure annulaire (19a) est formée par l'une des faces frontales de la douille (45) et une collerette (43) du porte-outil (3, 6) et que l'autre rainure annulaire (19b) est formée par l'autre face frontale de la douille (45) et une collerette (57) de la douille élastique (48).

22. Machine-outil selon les revendications 1 à 21, caractérisée par le fait que le mandrin (1) est réalisé sous la forme d'un plateau et que les ouvertures de fixation (2, 5) sont formées par des perçages pratiqués dans le plateau et dont les axes sont disposés sensiblement perpendiculairement au plan du plateau.

23. Machine-outil selon les revendications 5 et 22, caractérisée par le fait que les évidements pour les garnitures (22) portant le bossage de retenue élastique (20) sont respectivement formés par un perçage ou une traversée qui est sensiblement disposé parallèlement au perçage pratiqué dans le plateau et qui est placé à proximité dudit perçage de manière que sa zone marginale débouche dans celui-ci.

24. Machine-outil selon l'une ou plusieurs des revendications précédentes, caractérisée par le fait que sur le mandrin (1), sur le côté tourné vers les broches d'usinage (14) à proximité des ouvertures de fixation (5) pour les porte-outils munis d'outils usés (7), sont disposés des talons d'éjection (N) par lesquels les manchons d'actionnement (16) des logements de changement rapide (15) sont repoussés en arrière pour le déclenchement du processus d'éjection.

FIG. 1

FIG. 2

FIG. 3

EP 0 118 587 B1

FIG. 4

FIG. 5

EP 0 118 587 B1